(19) Europäisches Patentamt
European Patent Office
Office européen des brevets

(11) EP 1 743 915 A1

(12) # EUROPEAN PATENT APPLICATION
published in accordance with Art. 158(3) EPC

(43) Date of publication:
**17.01.2007 Bulletin 2007/03**

(21) Application number: **05710265.9**

(22) Date of filing: **09.02.2005**

(51) Int Cl.:
***C08J 5/18** (2006.01)* ***B29C 55/02** (2006.01)*
***C08L 35/00** (2006.01)* ***G02B 5/30** (2006.01)*
*C08L 25/12 (2006.01)*

(86) International application number:
**PCT/JP2005/002365**

(87) International publication number:
**WO 2005/100457 (27.10.2005 Gazette 2005/43)**

(84) Designated Contracting States:
**DE FR GB**

(30) Priority: **31.03.2004 JP 2004103526**

(71) Applicant: **Teijin Dupont Films Japan Limited**
**Tokyo 100-0011 (JP)**

(72) Inventor: **ONO, Mitsumasa,**
**c/o Teijin DuPont Films Japan Ltd.**
**Anpachi-gun,**
**Gifu 503-0123 (JP)**

(74) Representative: **Cockerton, Bruce Roger et al**
**Carpmaels & Ransford,**
**43-45 Bloomsbury Square**
**London WC1A 2RA (GB)**

(54) **ORIENTED FILM, PROCESS FOR PRODUCING THE SAME AND LAMINATE THEREOF**

(57) This invention provides an optical-anisotropy-controlled stretched film suitable for use as a retardation film and a retardation-functioning protective film for a sheet polarizer in a liquid crystal display, a process for the production thereof and a laminated material using the same. The present invention is a stretched film (X) obtained from a resin composition by melt-extrusion casting followed by stretching at least in one direction,
(1) the resin composition containing a specific maleimide-olefin copolymer (A) and an acrylonitrile-styrene copolymer (B) containing 21 to 45 % by weight of an acrylonitrile unit, and having a copolymer (A) content of at least 50 % by weight but not more than 99 % by weight and a copolymer (B) content of at least 1 % by weight but not more than 50 % by weight,
(2) its maximum retardation (Rp) at 550 nm in an in-plane direction, satisfying the following expression,

$$10\ nm < Rp \leq 400\ nm$$

(3) its retardation (Rth) at 550 nm in the thickness direction, satisfying the following expression,

$$0\ nm < |Rth| \leq 400\ nm.$$

EP 1 743 915 A1

## Description

### Technical Field

The present invention relates to a stretched film, a process for the production thereof and a laminated material. More specifically, it relates to a stretched film suitable for use as a retardation film and a retardation-functioning protective film for a sheet polarizer in a liquid crystal display and a process for the production thereof. Further, the present invention relates to a laminated material having the above stretched film as a component member.

### Background Art

A liquid crystal display is composed in principle of a liquid crystal cell, sheet polarizers arranged on both sides thereof one each and retardation films, arranged between the sheet polarizer and the liquid crystal cell.

The role of a sheet polarizer is to pass light in the polarization direction and block light in any direction other than the polarization direction, and a stretched polyvinyl alcohol (PVA) film doped with iodine plays such a role as a polarizer. Since the polarizer has low physical strength, protective films are attached to both sides of the polarizer. For bonding the polarizer and the protective films with an aqueous adhesive, highly hydrophilic cellulose triacetate (TAC) films are used as the protective films.

However, TAC films have high water vapor permeability and poor barrier properties, and there is therefore a defect that when a liquid crystal display is used for a long period of time in particular in a high-temperature and high-humidity environment, iodine in the polarizer sublimates to be eliminated and disappears through the TAC films, so that the polarizer is degraded in polarization performance.

The retardation film is used for decreasing the retardation caused by the birefringence of a liquid crystal device so that the viewing angle characteristic is improved. For the above retardation film, there are used a polycarbonate (PC) film that is excellent in heat resistance and transparency and that can be caused to exhibit large birefringence by stretching and a cyclic olefin polymer (COP) film composed mainly from norbornene, etc., as a monomer component.

In recent years, many attempts have been made to cause optical members used to have multi-functions each and decrease the number of the members for reducing the price of a liquid crystal display and decreasing the thickness of the optical members. As one example therefor, there has been proposed a method in which a retardation-functioning film is employed as a protective film for a sheet polarizer to obtain a liquid crystal display that is excellent in viewing angle characteristic without a retardation film.

For the above retardation-functioning film, studies have been made of a cyclic olefin polymer (COP) film composed mainly from norbornene, etc., as a monomer component and a polycarbonate (PC) film. However, when the PC film is used as a retardation-functioning film, there is involved a problem that the type of the adhesive that can be used is limited in respect of adhesion to PVA and resistance to a solvent. In the COP film, water remaining in PVA in the step of the production of a retardation film cannot be released due to low water vapor permeability and too high barrier properties thereof, and iodine, etc., are ultimately existent in an aqueous solution. There is hence a defect that when a retardation film using such a film is used in a high-temperature environment for a long period of time, iodine in a polarizer is decomposed to disappear, so that the polarization performance is degraded with the passage of time.

Japanese Patent No. 3,414,083 describes a resin composition containing a maleimide-olefin copolymer and an acrylonitrile-styrene copolymer having a specific composition.

JP-A-2000-80239 and JP-A-2000-80240 disclose transparent films having low retardation, which are formed from the above resin composition.

On the other hand, JP-A-2002-341140 discloses a retardation film formed from a polymer composition containing a polymer having a positive photoelastic coefficient and a polymer having a negative photoelastic coefficient. And, a combination of a maleimide-olefin copolymer with an acrylonitrile-styrene copolymer is described as a preferred example. Further, it is disclosed that known and publicly used methods such as a casting method (solution casting method) and a melt-extrusion method can be used as a film-forming method.

JP-A-2002-243943 discloses a protective film having low retardation for a polarizer.

### Disclosure of the Invention

It is an object of the present invention to provide a stretched film having controlled optical anisotropy, which is suitable for use as a retardation film for a liquid crystal display and a retardation-functioning protective film for a retardation film and a process for the production thereof.

It is another object of the present invention to provide a laminated material that has the above stretched film as a component and that is suitable for use as a retardation film.

For achieving the above objects, the present inventors have made diligent studies. As a result, it has been

found that a stretched film that exhibits specific retardation and that has suitably controlled optical anisotropy can be obtained even by a film-forming method based on melt-extrusion casting due to the use of a resin composition obtained by mixing a maleimide-olefin copolymer having a specific composition with an acrylonitrile-styrene copolymer in a specific mixing ratio., and the present invention has been accordingly completed.

That is, according to the present invention, there is provided a stretched film (X) obtained from a resin composition by melt-extrusion casting followed by stretching at least in one direction,

(1) the resin composition containing a maleimide-olefin copolymer (A) having 40 to 60 mol% of a recurring unit represented by the following formula (I),

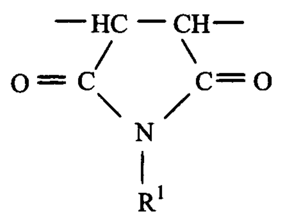

(I)

wherein $R^1$ is a hydrogen atom, an alkyl group having 1 to 6 carbon atoms or a monovalent aromatic hydrocarbon group,
and 60 to 40 mol% of a recurring unit represented by the following formula (II),

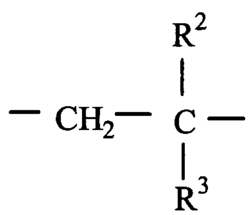

(II)

wherein each of $R^2$ and $R^3$ is independently a hydrogen atom or an alkyl group having 1 to 6 carbon atoms,
and an acrylonitrile-styrene copolymer (B) containing 21 to 45 % by weight of an acrylonitrile unit,
the resin composition having a copolymer (A) content of at least 50 % by weight but not more than 99 % by weight and a copolymer (B) content of at least 1 % by weight but not more than 50 % by weight,
(2) the stretched film (X) having a maximum retardation (Rp) at 550 nm in an in-plane direction, the maximum retardation satisfying the following expression,

$$10\ \text{nm} < Rp \leq 400\ \text{nm}$$

(3) the stretched film (X) having a retardation (Rth) at 550 nm in the thickness direction, the retardation satisfying the following expression,

$$0\ \text{nm} < |Rth| \leq 400\ \text{nm}.$$

According to the present invention, further, there is provided a process for the production of a stretched film, which comprises forming a film from a resin composition by melt-extrusion casting and then stretching the film at least in one direction,

(1) the resin composition containing a maleimide-olefin copolymer (A) having 40 to 60 mol% of a recurring unit represented by the following formula (I),

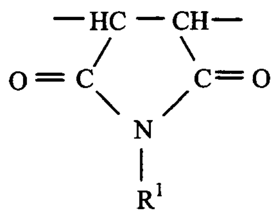

(I)

wherein $R^1$ is a hydrogen atom, an alkyl group having 1 to 6 carbon atoms or a monovalent aromatic hydrocarbon group,
and 60 to 40 mol% of a recurring unit represented by the following formula (II),

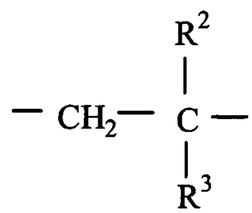

(II)

wherein each of $R^2$ and $R^3$ is independently a hydrogen atom or an alkyl group having 1 to 6 carbon atoms,
and an acrylonitrile-styrene copolymer (B) containing 21 to 45 % by weight of an acrylonitrile unit,
the resin composition having a copolymer (A) content of at least 50 % by weight but not more than 99 % by weight and a copolymer (B) content of at least 1 % by weight but not more than 50 % by weight,
(2) the film being stretched at a stretch ratio that satisfies the following expression,

$$R^{MD}>R^{TD} \text{ or } R^{TD}>R^{MD}$$

wherein $R^{MD}$ is a stretch ratio in the machine direction and $R^{TD}$ is a stretch ratio in the transverse direction.

Further, the present invention includes a laminated material comprising the above stretched film (X) and a polarizer formed thereon.

Further, the present invention includes a liquid crystal display comprising a liquid crystal cell and the above laminated materials arranged on both sides thereof.

The stretched film of the present invention has predetermined optical anisotropy and has a water vapor permeability in a predetermined range, so that it can be suitably used as a retardation film or a retardation-functioning retardation-protective film in a liquid crystal display.

According to the production process of the present invention, the above stretched film can be highly productively produced.

Further, the laminated material of the present invention is excellent in durability and viewing angle properties and is suitable as a polarizer in a liquid crystal display.

Best Mode for Embodiments of the Invention

<Stretched film (X) >

(Resin composition)

The resin composition contains at least 50 % by weight but not more than 99 % by weight of a maleimide-olefin copolymer (to be sometimes abbreviated as "copolymer (A)" hereinafter) and at least 1 % by weight but not more than 50 % by weight of an acrylonitrile-styrene copolymer (to be sometimes abbreviated as "copolymer (B)" hereinafter).

(Maleimide-olefin copolymer)

The copolymer (A) has 40 to 60 mol% of a recurring unit of the following formula (I) (to be sometimes abbreviated

as "unit (I)" hereinafter) and 60 to 40 mol% of a recurring unit of the formula (II) (to be sometimes abbreviated as "unit (II)" hereinafter).

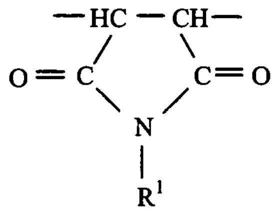
(I)

In the formula (I), $R^1$ is a hydrogen atom, an alkyl group having 1 to 6 carbon atoms or a monovalent aromatic hydrocarbon group. The alkyl group having 1 to 6 carbon atoms includes methyl, ethyl, propyl, butyl, etc. The monovalent aromatic hydrocarbon group includes phenyl, naphthyl, anthracenyl, pyridyl, etc.

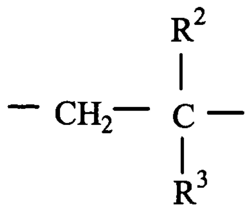
(II)

In the formula (II), each of $R^2$ and $R^3$ is independently a hydrogen atom or an alkyl group having 1 to 6 carbon atoms. The alkyl group having 1 to 6 carbon atoms includes methyl, ethyl, propyl, etc. Each of $R^2$ and $R^3$ is preferably methyl.

The copolymer (A) having the units (I) and (II) can be obtained from maleimides and olefins by a radical polymerization reaction.

Examples of the compound that gives the unit (I) include maleimides such as maleimide, N-methylmaleimide, N-ethylmaleimide, N-n-propylmaleimide, N-i-propylmaleimide, N-n-butylmaleimide, N-i-butylmaleimide, N-s-butylmaleimide, N-t-butylmaleimide, N-n-pentylmaleimide, N-n-hexylmaleimide, N-phenylmaleimide, naphthylmaleimide, anthracenylmaleimide, pyridylmaleimide, pyrimidinylmaleimide, N-cyclopropylmaleimide, N-cyclobutylmaleimide, N-cyclohexylmaleimide, etc., and from the viewpoint of heat resistance, mechanical properties and transparency, N-methylmaleimide or N-phenylmaleimide is particularly preferred. Further, these compounds may be used alone or in combination of two or more members of these.

Examples of the compound that gives the unit (II) include olefins such as isobutene, 2-methyl-1-butene, 2-methyl-1-pentene, 2-methyl-1-hexene, and from the viewpoint of heat resistance, mechanical properties and transparency, isobutene is particularly preferred. Further, these compounds may be used alone or in combination of two or more members of these.

The content of the unit (I) based on the total molar amount of the recurring units of the copolymer (A) is 40 to 60 mol%, and it is preferably 45 to 55 mol% in view of heat resistance and mechanical properties. When the content of the unit (I) exceeds 60 mol%, a composition obtained is fragile. When it is less than 40 mol%, a composition obtained has low heat resistance.

Further, the content of the unit (II) based on the total molar amount of the recurring structural units of the copolymer (A) is 60 to 40 mol%, and it is preferably 55 to 45 mol% from the viewpoint of heat resistance and mechanical properties. When the content of the unit (II) exceeds 60 mol%, a composition obtained sometimes has low heat resistance. When it is less than 40 mol%, a composition obtained is fragile.

For polymerization of these monomers, there can be employed any known polymerization method such as a bulk polymerization method, a solution polymerization method, a suspension polymerization method or an emulsion polymerization method, while a precipitation polymerization is particularly preferred in view of transparency and a color tone of the composition obtained.

The number average molecular weight of the copolymer (A) is preferably 1 x $10^3$ to 5 x $10^6$. The number average molecular weight can be determined by gel permeation chromatography (GPC). When the number average molecular weight of the maleimide-olefin copolymer is less than 1 x $10^3$, a film obtained is liable to be fragile. When it exceeds 5 x $10^6$, a film obtained is liable to be poor in surface properties.

(Acrylonitrile-styrene copolymer)

The copolymer (B) has an acrylonitrile component content of 21 to 45 % by weight based on the weight of the copolymer (B). When the acrylonitrile component content is outside the above range, the compatibility of the copolymer (A) and the copolymer (B) is decreased, so that, undesirably, a resin composition obtained comes to be opaque and that the heat resistance thereof decreases. The acrylonitrile component content is preferably 30 to 45 % by weight.

The number average molecular weight of the copolymer (B) is preferably 1 x $10^3$ to 1 x $10^6$. The number average molecular weight can be determined by gel permeation chromatography (GPC).

(Contents of copolymers (A) and (B) in resin composition)

In the resin composition, the content of the copolymer (A) is at least 50 % by weight but not more than 99 % by weight, and the content of the copolymer (B) is at least 1 % by weight but not more than 50 % by weight. The contents of the copolymer (A) and the copolymer (B) are adjusted to the above ranges, whereby the copolymer (A) having a positive birefringence and the copolymer (B) having a negative birefringence are well-balanced, so that a stretched film formed can have a retardation value defined in the present invention.

Further, when the content of the copolymer (A) is less than the lower limit, the heat resistance of a resin composition obtained decreases. When it exceeds the upper limit, the processing temperature of a resin composition obtained is high, whereby the copolymer (B) is thermally deteriorated. Each case is hence undesirable.

In the resin composition, preferably, the content of the copolymer (A) is over 75 % by weight but not more than 99 % by weight, and the content of the copolymer (B) is at least 1 % by weight but less than 25 % by weight. Further preferably, the content of the copolymer (A) is over 50 % by weight but not more than 65 % by weight, and the content of the copolymer (B) is at least 35 % by weight but less than 50 % by weight.

The resin composition may contain other polymer, a stabilizer, an ultraviolet absorbent, a processing aid, a flame retardant, an antistatic agent, etc., so long as the scope of tenor of the present invention is not exceeded.

(Retardation)

In the stretched film (X) of the present invention, (2) the maximum retardation (Rp) at 550 nm in an in-plane direction satisfies the following expression.

$$10\ nm < Rp \leq 400\ nm$$

Further, (3) the retardation (Rth) at 550 nm in the thickness direction satisfies the following expression.

$$0\ nm < |Rth| \leq 400\ nm.$$

When Rp is less than the lower limit, the compensation of birefringence of a liquid crystal device is sometimes insufficient. When Rp exceeds the upper limit, further, the compensation of birefringence of a liquid crystal device is sometimes insufficient. When Rth exceeds the upper limit, the compensation of the birefringence caused by a thickness-direction factor of a liquid crystal device is sometimes insufficient.

Rp and Rth are brought into the above ranges, whereby the birefringence of a liquid crystal device can be compensated in a desirable state when the resin composition is used in particular for optical members such as a retardation film or a retardation-functioning sheet polarizer substrate, and obtained displays such as a liquid crystal display, etc., have excellent viewing angle properties.

Further preferably, Rp satisfies the following expression.

$$75\ nm \leq Rp \leq 400\ nm$$

Further, when the maximum retardation at 550 nm is 1, preferably, the wavelength dispersion characteristic of Rp at each of 400 nm and 700 nm is in the range of 0.4 to 1.7, preferably 0.6 to 1.5, from the viewpoint that the coloring of transmitted light is prevented.

(Thickness)

The thickness of the stretched film in the present invention is preferably in the range of 0.5 to 400 μm, more preferably 5 to 200 μm, still more preferably 5 to 100 μm. When the film thickness exceeds 400 μm, it not only goes against the tendency to decrease the weight and thickness of a display and the tendency to decrease the cost thereof, but such a thickness can cause the light transmittance to decrease due to absorption, scattering and the like. When the film thickness is less than 0.5 μm, further, the film may be sometimes degraded in handling properties.

(Stretched film (X-a))

The stretched film (X) is preferably a stretched film (X-a) wherein:

(1-a) the resin composition has a copolymer (A) content of over 75 % by weight but not more than 99 % by weight and a copolymer (B) content of at least 1 % by weight but less than 25 % by weight,
(2-a) Rp satisfies the following expression,

$$10\ nm < Rp \leq 250\ nm$$

and
(3-a) Rth satisfies the following expression,

$$0\ nm < Rth \leq 400\ nm.$$

Rp is preferably 13 to 220 nm, more preferably 15 to 200 nm, still more preferably 75 to 200 nm. Rth is preferably 5 to 350 nm, more preferably 10 to 300 nm.
Having Rp and Rth in the above ranges, the stretched film (X-a) compensates the birefringence of a liquid crystal device in a desirable state. Therefore, the stretched film (X-a) can be suitably used as an optical member that is required to have optical anisotropy capable of controlling retardation of transmitted light into a proper range, in particular such as a retardation film, a retardation-functioning sheet polarizer substrate, etc., out of components constituting an optical member.
In the unit (I) of the copolymer (A) for the stretched film (X-a), $R^1$ is preferably an alkyl group having 1 to 6 carbon atoms, and more specifically, it is preferably methyl.

(Stretched film (X-b))

Further, the stretched film (X) is preferably a stretched film (X-b) wherein:

(1-b) the resin composition has a copolymer (A) content of over 50 % by weight but not more than 65 % by weight and a copolymer (B) content of at least 35 % by weight but less than 50 % by weight,
(2-b) Rp satisfies the following expression,

$$10\ nm < Rp \leq 400\ nm$$

and
(3-b) Rth satisfies the following expression,

$$0\ nm < |Rth| \leq 400\ nm.$$

Rp is preferably 13 to 350 nm, more preferably 15 to 300 nm, still more preferably 75 to 300 nm. Rth is preferably -350 to 350 nm, more preferably -300 to 300 nm.
The stretched film (X-b) preferably satisfies the following expressions,

$$ny<nz<nx$$

and

$$0.3 \leq \{(nx-nz)/(nx-ny)\} \leq 0.9,$$

wherein nx is a refractive index in an in-plane lagging axis direction at 550 nm,
ny is a refractive index in a direction perpendicular to the in-plane lagging axis at 550 nm, and
nz is a refractive index in the thickness direction at 550 nm.

In the unit (I) of the copolymer (A) of the stretched film (X-b), $R^1$ is preferably a monovalent aromatic hydrocarbon group. The monovalent aromatic hydrocarbon group includes phenyl, naphthyl, anthracenyl and pyridyl.

(Water vapor permeability)

The stretched film of the present invention has a water vapor permeability in the range of 5 to 250 g/($m^2$ • day), preferably 10 to 200 g/($m^2$ • day), when measured under conditions of 40°C and 90 %RH by a calcium chloride cup method according to JIS-Z-0208.

When the water vapor permeability exceeds 250 g/($m^2$ • day), the stretched film is poor in barrier properties, and iodine in a polarizer sublimates to be eliminated and disappears through the stretched film with the passage of time, so that the polarization performance of the polarizer can be decreased. On the other hand, when the water vapor permeability is less than 5 g/($m^2$ • day), residual water in polyvinyl alcohol (PVA) cannot be released, and iodine exists in the state of being an aqueous solution, so that iodine in a polarizer is decomposed to disappear with the passage of time, which may result in a decrease in the polarization performance of a retardation film with the passage of time. Therefore, a stretched film having a water vapor permeability of 5 to 250 g/($m^2$ • day) is preferred.

(Coarse streaked projections)

In the stretched film of the present invention, preferably, the number of coarse streaked projections on the surface is one or less per meter of width in the direction (transverse direction) perpendicular to the continuous film-forming direction. When a film having more coarse streaked projections than that is used as an optical member for constituting a display, it scatters and absorbs light that is to be transmitted. As a result, the display is degraded in brightness and image quality. In particular, in the production of large displays such as a liquid crystal display TV set, a portion where a coarse streaked projection is present in a film cannot be used, so that the yield of products is greatly decreased, which is undesirable from the viewpoint of a production cost. Further, while optical members are stacked to constitute a display, the above streaked projection can be an obstacle for desirable stacking when it is on a film for constituting an optical member.

The above coarse streaked projection refers to a projection that has a height of 10 μm or more, a width of 0.3 mm or more and a length of 5 cm or more and that extends along the film-extrusion direction (continuous film-forming direction), and it has nothing to do with whether it is continuous or discontinuous.

The above coarse streaked projection is often caused by the deterioration of a raw material when the raw material is melted under heat, and in particular, it is in many cases caused by the adherence of a small amount of a deteriorated raw material to the lip portion of an extrusion die slit. Generally, this streaked projection grows in size with the passage of time and becomes a big defect on the film appearance.

The means for preventing the occurrence of the coarse streaked projection includes, for example, means of

(1) decreasing the melting temperature to the lowest possible,
(2) providing an atmosphere of vacuum or an inert gas such as nitrogen, etc., for steps starting with the feeding of the raw material and ending with the melt-extrusion,
(3) employing such a material or form for the lip portion of slit of an extrusion die that a deteriorated material hardly adheres thereto, in order to prevent the adherence of a substance that would cause the streaked projection to the lip portion, and
(4) preventing the contact of a molten raw material resin to the lip portion, when the melt-extrusion is carried out.

Above all, as means for preventing the contact of a molten raw material resin to the lip portion, the method of using at least three layers for constituting a film being formed by melt-extrusion is preferred. That is, the film of the

present invention to be used as a product is arranged to be a layer that is not the outermost layer, and as outermost layers, there are provided layers that work as protective films and that are to be peeled off when the film of the present invention is used. In this manner, the raw material for the film that is to be actually used as a product can be melt-extruded without bringing it into contact with the lip portion.

The number of coarse streaked projections on the film surface can be measured and evaluated by the following method. First, a square (50 cm x 50 cm) sample along the continuous film-forming direction and the direction perpendicular to the film-forming direction is taken from the film in any position. And, the sample was measured for a film thickness in the entire width in the direction perpendicular to the film-forming direction, at intervals of 5 cm along the continuous film-forming direction.

When the thus-obtained thickness profile has a projection, the height, width and length thereof are defined as follows. (i) On a perpendicular line drawn from the projection peak to a reference line in parallel with the film plane excluding the projection portion in the above profile, a distance from the projection peak to a tangent line contacting the lowest portion of both sides immediately contiguous to the projection is taken as a "height". (ii) In edge lines on sides of the projection in the profile, a component that is a distance between two points formed by contacting of tangent lines contacting the edge lines to have maximum gradients to the tangent line contacting the lowest portion of both sides immediately contiguous to the projection and that is in parallel with the reference line in parallel with the film plane in the above profile is taken as a "width".

A film is checked for any projection having the above height of 10 μm or more and the width of 0.3 mm or more. When such a projection is detected, the measurement of the film for a thickness along the entire width perpendicular to the film-forming direction is repeated in the vicinities of the detection position along the continuous film-forming direction. And, the film is checked for a projection that is considered being continued from the projection that has been detected in the beginning. When a continuous projection is found, the film is checked for the continuous projection consecutively in the vicinities of that position. Places where the above continuous projection comes to have a "height" of less than 1 μm are taken as a start or end point of the above projection, and a distance between the start point and the end point is taken as a "length" of the projection.

In the above manner, a projection having a height of 10 μm or more and a width of 0.3 mm or more and further having a length of 5 cm or more is determined to be a coarse streaked projection. Such coarse streaked projections in the sample are counted. The above measurement is carried out n times (n = 10), an obtained average value is converted to a value per a width of 1 m (that is, doubled), and the resultant value is taken as a number of coarse streaked projections per a width of 1 m perpendicular to the continuous film-forming direction.

<Method of production of film>

(Melt-extrusion casting)

The stretched film of the present invention can be obtained by melt-extrusion casting of the above resin composition to form a film and stretching the film at least in one direction.

For the melt-extrusion, a conventional known method can be employed. Specifically, the method includes a method in which pellets of the above resin composition dried are fed to an extruder and the molten resin is extruded through a slit die such as a T-die, and a method in which a vent device is set to an extruder to which resin pellets are fed, and the molten resin is similarly extruded through a slit die such as a T-die, while water and various gas components generated are discharged during the melt-extrusion.

A molten resin extruded through the slit die is cast and allowed to cool to solidness. As a method for the cooling to solidness, any conventional known method can be employed. For example, there is a method in which the molten resin is cast onto a cooling roll that is rotating, to form a sheet.

The surface temperature of the cooling roll is preferably set with regard to the glass transition temperature (Tg) of the resin composition such that it is in the range of (Tg - 100)˚C to (Tg + 20)˚C. The surface temperature of the cooling roll is more preferably set with regard to the glass transition temperature (Tg) of the resin composition such that it is in the range of (Tg - 30)˚C to (Tg - 5)˚C. When the surface temperature of the cooling roll exceeds the upper limit, a molten resin may adhere to the roll before its solidification. Further, when the surface temperature of the cooling roll is less than the lower limit, a molten resin may be solidified too rapidly and slips on the surface of the above roll, with result that the flatness of a sheet obtained may be impaired.

When the molten resin is cast onto cooling roll, a metal wire is set in the vicinities of the position on the cooling roll where the molten resin lands, and an electrostatic field is generated by flowing a current to charge the resin, so that the intimate contact of the resin to the metal surface of the cooling roll is enhanced. The above means is also effective from the viewpoint that the flatness of the film is improved. In this case, an electrolytic substance may be added to the resin composition so long as the tenor of the present invention is not exceeded.

(Stretching)

The sheet-shaped material obtained by the melt-extrusion casting is stretched at least in one direction, whereby the film can be caused to exhibit retardation properties and the yield of a product can be improved. Preferably, the sheet-shaped material is biaxially stretched.

As a method for the above stretching, a conventional known method can be employed. For example, when the sheet-shaped material is stretched in the lengthwise direction (to be sometimes referred to as film-forming direction, longitudinal direction or MD direction), there can be employed a method in which the stretching is carried out by means of a circumferential velocity difference of two or more rolls or a method in which the stretching is carried out in an oven.

In the stretching method using a roll, the method for heating the sheet-shaped material (non-stretched film) includes a method of induction heating by a roll through a heating medium or a method of external heating with an infrared heater, and one method or a plurality of methods can be employed. In the method for stretching in an oven, the method for heating the sheet-shaped material (non-stretched film) includes a method in which a tenter-system oven for gripping two ends of a film with clips is used and the distance between the clips is increased according to a stretch ratio, a method in which a roll system is provided in an oven and a film is passed through for the stretching, and a method in which the non-stretched film is stretched by means of only a velocity difference between an introduction side and an outputting side while the film is set free in the width direction in the oven. One of these methods or a plurality of these methods can be employed.

Further, when sheet-shaped material is stretched in the widthwise direction (to be sometimes referred to as the direction perpendicular to the film-forming direction, transverse direction or TD direction), there can be employed a method in which the stretching is carried out by providing a difference to a distance between clip conveyor rails on the introduction side and that on the outputting side in a tenter oven of a clip-gripping system. Further, when it is stretched in two directions of lengthwise and widthwise directions, it may be stretched in the lengthwise direction and the widthwise direction sequentially or simultaneously.

(Stretching temperature)

The film-stretching temperature (Td) in the present invention is preferably a temperature between Tg and (Tg + 40˚C). When the film stretching temperature is less than Tg (glass transition temperature of the resin composition), the stretching itself is difficult. When the stretching temperature exceeds (Tg + 40˚C), the stress required for the stretching is extremely low, and when the thickness of a non-stretched raw material varies, a thin potion is too liable to be stretched and a more intensified thickness non-uniformity appears after the stretching, which may result in a variability in retardation.

(Stretch ratio)

Concerning stretch ratios, $R^{MD}>R^{TD}$ or $R^{TD}>R^{MD}$ is preferred. $R^{MD}$ represents a stretch ratio in the lengthwise direction, and $R^{TD}$ represents a stretch ratio in the widthwise direction. The above description means that $R^{MD}$ and $R^{TD}$ are not equal to each other or that the stretch ratio in one direction is greater than the stretch ratio in the other direction. Further, the above description does not necessarily mean that only biaxial stretching is carried out, and there is included a case where a film substantially shrinks in the widthwise direction to cause the value of $R^{TD}$ to be less than 1 by carrying out monoaxial stretching in the lengthwise direction.

In these stretch ratios, more preferably, $|R^{MD}/R^{TD}|$ or $|R^{TD}/R^{MD}|$ is in the range of over 1.0 but not more than 5.0.

More specifically, $R^{MD}$ is preferably in the range of 1.0 to 1.8, more preferably in the range of 1.2 to 1.6. When $R^{MD}$ is too small, the desired retardation may not be obtained. Further, when $R^{MD}$ is too large, the desired retardation characteristics may not be obtained in the in-plane direction and the thickness direction of the film.

Further, $R^{TD}$ is preferably in the range of 1.5 to 3.5, more preferably in the range of 1.5 to 3.0. When $R^{TD}$ is too small, the desired retardation may not be obtained. Further, when $R^{TD}$ is too large, the desired retardation characteristics may not be obtained in the in-plane direction and the thickness direction of the film.

(Stretching velocity)

Preferably, the stretching velocity is 5 to 5,000 %/minute. Preferably, therefore, the stretching temperature (Td) is in the range of Tg to (Tg + 40˚C), and the stretching velocity is 5 to 5,000 %/minute.

The stretched film may be subjected to post treatment such as thermal treatment, as required for improving its thermal stability or the like. This post treatment may be carried out as a step that follows the film stretching step or may be carried out in a separate step.

<Laminated material>

The laminated material of the present invention comprises the stretched film (X) and a polarizer formed thereon.

The polarizer is formed from a polyvinyl alcohol containing iodine or an anisotropic dye and has the form of a film. The anisotropic dye includes congo red, methylene blue, a stilbene dye and 1,1'-diethyl-2,2'-cyanine chloride.

The above laminated material includes a laminated material formed by further forming other film on the polarizer. As "other" film, preferred is a stretched film (Y) formed from a resin composition by melt-extrusion casting followed by stretching at least in one direction,

(1-c) the resin composition containing a maleimide-olefin copolymer (A) having 40 to 60 mol% of a recurring unit represented by the following formula (I),

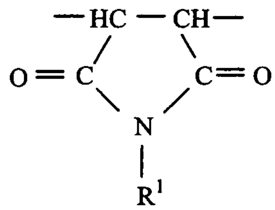

(I)

wherein $R^1$ is a hydrogen atom, an alkyl group having 1 to 6 carbon atoms or a monovalent aromatic hydrocarbon group, and 60 to 40 mol% of a recurring unit represented by the following formula (II),

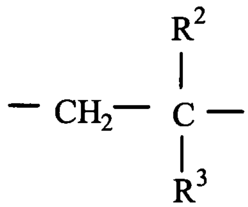

(II)

wherein each of $R^2$ and $R^3$ is independently a hydrogen atom or an alkyl group having 1 to 6 carbon atoms, and an acrylonitrile-styrene copolymer (B) containing 21 to 45 % by weight of an acrylonitrile unit, the resin composition having a copolymer (A) content of over 65 % by weight but less than 75 % by weight and a copolymer (B) content of over 25 % by weight but less 35 % by weight,

(2-c) the stretched film (Y) having a maximum retardation (Rp) at 550 nm in an in-plane direction, the maximum retardation satisfying the following expression,

$$Rp < 10 \text{ nm.}$$

The stretched film (Y) can be produced in the same manner as in the production of the stretched film (X) .

Examples of the laminated material therefore include laminated materials of the following constitutions. X represents a stretched film (X), Y represents a stretched film (Y) and P represents a polarizer.

- X/P
- X/P/film
- X/P/Y

The laminated material of the present invention can be suitably used as a polarizer in a liquid crystal display.

<Liquid crystal display>

The liquid crystal display of the present invention has a liquid crystal cell (LC) and the above laminated materials

arranged on both sides thereof one each. It is preferred to arrange the laminated materials such that the stretched film (X) of each is in contact with the liquid crystal cell. Preferably, a prism sheet (PS) and a diffusing film (DF) are further laminated.

For example, the liquid crystal display therefore includes the following constitutions.

- Y/P/X/LC/X/P/Y
- Y/P/X/LC/X/P/Y/PS/DF

Examples

The present invention will be explained hereinafter with reference to Examples. Various property values were measured or evaluated by the following methods.

(1) Identification and molecular weight of resin composition

Some portions of resin composition pellets obtained were subjected to $^{1}H$ and $^{13}C$-NMR measurements (name of apparatus JNM-alpha600, supplied by JEOL Ltd.) using deutero chloroform as a solvent and GC/MS measurement (name of apparatus HP5973, supplied by Yokokawa Analytical) to identify and quantitatively determine components. Further, other portions of the resin composition pellets were measured with GPC (gel permeation chromatography) (name of apparatus PL-EMD960) supplied by Polymer Laboratories, Inc., to determine a molecular weight (solvent: chloroform, calibration curve was prepared using monodisperse polystyrene).

(2) Maximum retardation (Rp) at 550 nm in film in-plane direction

A 550 nm monochromatic light was perpendicularly introduced to the surface of a stretched film obtained with an ellipsometer (name of apparatus M-220, supplied by JASCO Corporation), to measure transmitted light. The transmitted light was measured while a sample support with the film fixed thereto was caused to rotate in a plane perpendicular to an optical axis with the optical axis being as the center, and a retardation at an angle at which a retardation calculated from measurement values came to be the largest was taken as a maximum retardation (nm) in in-plane direction.

(3) Retardation (Rth) at 550 nm in film thickness direction

A stretched film obtained was subjected to transmitted-light measurement with an ellipsometer (name of apparatus M-220, supplied by JASCO Corporation) in which the incidence angle of 550 nm monochromatic light was changed. A sample support with the film fixed thereto was caused to rotate in a plane perpendicular to the optical axis with the optical axis being as the center, and the sample support was fixed at a rotation angle at which a maximum retardation in the in-plane direction was obtainable. Then, the sample support was rotated at angles in a range of 0° (angle perpendicular to the optical axis) to 50° in parallel with an alignment main axis (lag phase axis) that gave a maximum retardation in the in-plane direction and with regard to a straight line, as the center, which passed the optical axis (the above angle will be referred to as "the rotation angle"), to measure the transmitted light. The thus-obtained retardation data were plotted with regard to the rotation angles and fitted with a function of the rotation angles to introduce a correlation expression of retardations in the in-plane lag phase axis direction, the direction perpendicular to the in-plane lag axis and the thickness direction. Refractive indices in the in-plane lag phase axis direction, the direction perpendicular to the in-plane lag phase axis and the thickness direction were determined on the basis of the correlation expression of retardations in the above directions, a measurement value of the film thickness and an average refractive index (n(550)) of the film measured by other method, and then a retardation (nm) in the thickness direction was determined according to the following expression.

$$Rth\ (nm) = d(nm) \times ((nx + ny)/2 - nz)$$

wherein Rth represents a retardation in the thickness direction, d represents a film thickness, nx represents a refractive index in the in-plane lag phase axis direction, ny represents a refractive index in the direction perpendicular to the in-plane lag phase axis, and nz represents a refractive index in the thickness direction.

With regard to the average refractive index of the film, the average refractive index obtained by measurements with a refractometer using three laser beams having wavelengths of 473 nm, 633 nm and 830 nm was substituted in the following Cauchy's refractivity wavelength dispersion fitting expression,

$$n(\lambda) = a/\lambda^4 + b/\lambda^2 + c$$

wherein n(λ) represents an average refractive index at a wavelength of λ (nm), a, b and c represent constants and λ represents a measurement wavelength (nm), and on the basis of the obtained three expressions, the constants a, b and c were determined, followed by the calculation of an average refractive index (n(550)) at 550 nm.

(4) Water vapor permeability of film

A film obtained was measured according to JIS Z-0208. The film had a water vapor permeable area of 30 $cm^2$ and the measurement for water vapor permeability was carried out in an atmosphere having a temperature of 40˚C and a relative humidity of 90 %.

(5) Film thickness

A micrometer was used for measurement. A film was placed on a K-402B type sample bed supplied by Anritsu K.K., a tracer was pressed thereon. Data of displacement of the tracer was obtained through a KG3001 type indicator supplied by Anritsu K.K. and used as a thickness (μm) data.

(6) Durability of polarizer

A polarizer was left in an atmosphere having a temperature of 80˚C and a relative humidity of 90 % for 1,000 hours. On the basis of a difference between polarization degrees that the polarizer had before and after the treatment, the durability of the polarizer was evaluated according to the following ratings.

o: The polarization degree after the treatment is at least 95 % of the polarization before the treatment.
x: The polarization degree after the treatment is less than 95 % of the polarization before the treatment.

(7) Viewing angle characteristic of polarizer

Polarizers were attached to both surfaces of a liquid crystal cell one each such that the rubbing axial direction of the substrate surface contiguous to the liquid crystal cell and the transmission axis of each polarizer crossed each other at right angles, and the thus-prepared panel was evaluated. As a liquid crystal cell, a commercially available VA mode LCD monitor or IPS mode LCD monitor, from which an optical compensation film and a polarizer thereof had been peeled, was used. The thus-prepared liquid crystal display was evaluated for viewing angles by means of EZ-contrast supplied by ELDIM Corporation. The evaluation was made on the basis of a measured viewing angle according to the following ratings.

o: The range of the gradient angle from the normal to a panel surface that exhibits a contrast ratio of 10 or more when a liquid crystal cell displays white and black is at least 60˚ in all of the upward and downward directions and leftward and rightward directions against the vertical direction to the display in front.

x: The range of the gradient angle from the normal to a panel surface that exhibits a contrast ratio of 10 or more when a liquid crystal cell displays white and black is less than 60˚ in all of the upward and downward directions and leftward and rightward directions against the vertical direction to the display in front.

(8) Number of coarse streaked projections

First, of films obtained, a film sample is taken 8 hours after the extrusion is started, and a square (50 cm x 50 cm) sample along the continuous film-forming direction and the direction perpendicular to the film-forming direction is taken from any portion of the film sample. And, the sample was measured for a film thickness in the entire width in the direction perpendicular to the film-forming direction, at intervals of 5 cm along the continuous film-forming direction.

When the thus-obtained thickness profile has a projection, the height, width and length thereof are defined as follows. i) On a perpendicular line drawn from the projection peak to a reference line in parallel with the film plane excluding the projection portion in the above profile, a distance from the projection peak to a tangent line contacting the lowest portion of both sides immediately contiguous to the projection is taken as a "height". ii) In edge lines on sides of the projection in the profile, a component that is a distance between two points formed by contacting of tangent lines

contacting the edge lines to have maximum gradients to the tangent line contacting the lowest portion of both sides immediately contiguous to the projection and that is in parallel with the reference line in parallel with the film plane in the above profile is taken as a "width".

A film is checked for any projection having the above height of 10 μm or more and the width of 0.3 mm or more. When such a projection is detected, the measurement of the film for a thickness along the entire width perpendicular to the continuous film-forming direction is repeated in the vicinities of the detection position along the film-forming direction. And, the film is checked for a projection that is considered being continued from the projection that has been detected in the beginning. When a continuous projection is found, the film is checked for the continuous projection consecutively in the vicinities of that position. Places where the above continuous projection comes to have a "height" of less than 1 μm are taken as a start or end point of the above projection, and a distance between the start point and the end point is taken as a "length" of the projection.

In the above manner, a projection having a height of 10 μm or more and a width of 0.3 mm or more and further having a length of 5 cm or more is determined to be a coarse streaked projection. Such coarse streaked projections in the sample are counted. The above measurement is carried out 10 times, an obtained average value is converted to a value per a width of 1 m (that is, doubled), and the resultant value is taken as a number of coarse streaked projections per a width of 1 m along the continuous film-forming direction.

Example 1

(Copolymer (A1))

An autoclave with a stirrer, a nitrogen-introducing tube, a thermometer and a degassing tube was charged with 12 kg of N-methylmaleimide, 8 g of t-butyl peroxyneodecanoate and 150 liters of a toluene/methanol (weight ratio 1:1) mixture solvent and purged with nitrogen several times. Then, 85 liters of isobutene was charged, and the mixture was reacted at 60˚C for 6 hours. Particles obtained were centrifuged and then dried. The thus-obtained N-methylmaleimide-isobutene copolymer (copolymer (A1)) had a molecular weight (Mn) of 95,000, and the contents of a maleimide unit and an isobutene unit were 50 mol%, respectively.

(Copolymer (B))

An acrylonitrile-styrene copolymer (copolymer (B)) was prepared. The copolymer (B) had an acrylonitrile content of 30 % by weight.

(Preparation of resin composition)

85 Parts by weight of the copolymer (A1) and 15 parts by weight of the copolymer (B) were mixed by shaking, and the mixture was kneaded and extruded under nitrogen with a twin-screw extruder to give pellets (I) of the resin composition. The resin composition had a Tg of 117˚C .

(Film formation)

The pellets (I) were dried at 110˚C for 10 hours, then fed to an extruder, melted at a melting temperature of 295˚C, then filtered and extruded through a single-layer die. The melt was extruded onto a rotary cooling drum to give a non-stretched film having a total thickness of 176 μm.

(Stretching)

The non-stretched film obtained was supplied to a stenter, and simultaneously at 150˚C it was stretched 1.1 times as large as the non-stretched film at 15 %/minute in the machine direction and stretched 2.0 times as large as the non-stretched film at 150 %/minute in the transverse direction to give a biaxially stretched film (1) having a thickness of 80 μm. Table 1 shows properties of the thus-obtained biaxially stretched film. Further, the number of coarse streaked projections of the biaxially stretched film was 0.1 /m-width.

Example 2

A non-stretched film having a thickness of 160 μm was obtained in the same manner as in Example 1. Then, the non-stretched film obtained was supplied to a stenter, and it was stretched 2.2 times as large as the non-stretched film at 150 %/minute in the transverse direction at 150˚C to give a monoaxially stretched film (2) having a thickness of

80 μm. Table 1 shows the properties thereof.

Example 3

A non-stretched film having a thickness of 192 μm was obtained in the same manner as in Example 1. Then, the non-stretched film was pre-heated to 125˚C and stretched 1.2 times as large as the non-stretched film at a stretch ratio of 200 %/minute in the machine direction between a low-speed roller and a high-speed lower under heat with one infrared heater having a surface temperature of 800˚C, the infrared heater being positioned 15 mm above the film. Then, the stretched film was supplied to a stenter and stretched sequentially 2.0 times as large as the non-stretched film at a stretch ratio of 150 %/minute in the transverse direction at a stretching temperature of 150˚C to give a biaxially stretched film (3) having a thickness of 80 μm. Table 1 shows the properties thereof.

Example 4

A non-stretched film having a thickness of 180 μm was obtained in the same manner as in Example 1. Then, the non-stretched film was pre-heated to 125˚C and stretched 1.5 times as large as the non-stretched film at a stretch ratio of 200 %/minute in the machine direction between a low-speed roller and a high-speed lower under heat with one infrared heater having a surface temperature of 900˚C, the infrared heater being positioned 15 mm above the film. Then, the stretched film was supplied to a stenter and stretched sequentially 1.5 times as large as the non-stretched film at a stretch ratio of 150 %/minute in the transverse direction at a stretching temperature of 150˚C to give a biaxially stretched film (4) having a thickness of 80 μm. Table 1 shows the properties thereof.

Example 5

A biaxially stretched film (5) having a thickness of 80 μm was obtained in the same manner as in Example 3 except that 78 parts by weight of the copolymer (A1) and 22 parts by weight of the copolymer (B) were used. Table 1 shows the properties thereof.

Example 6

A biaxially stretched film (6) having a thickness of 80 μm was obtained in the same manner as in Example 3 except that 90 parts by weight of the copolymer (A1) and 10 parts by weight of the copolymer (B) were used. Table 1 shows the properties thereof.

Example 7

A biaxially stretched film (7) having a thickness of 80 μm was obtained in the same manner as in Example 1 except that 55 parts by weight of the copolymer (A1) and 45 parts by weight of the copolymer (B) were used. Table 1 shows the properties thereof.

Example 8

(Copolymer (A2))

An autoclave with a stirrer, a nitrogen-introducing tube, a thermometer and a degassing tube was charged with 12 kg of N-phenylmaleimide, 8 g of t-butyl peroxyneodecanoate and 150 liters of a toluene/methanol (weight ratio 1:1) mixture solvent and purged with nitrogen several times. Then, 85 liters of isobutene was charged, and the mixture was reacted at 60˚C for 6 hours. Particles obtained were centrifuged and then dried. The thus-obtained N-phenylmaleimide-isobutene copolymer (copolymer (A2)) had a molecular weight (Mn) of 95,000, and the contents of a maleimide unit and an isobutene unit were 60 mol% and 40 mol%, respectively.

(Preparation of resin composition)

50 Parts by weight of the copolymer (A2) and 50 parts by weight of the copolymer (B) were mixed by shaking, and the mixture was kneaded and extruded under nitrogen with a twin-screw extruder to give pellets (II) of the resin composition. The resin composition had a Tg of 128˚C.

(Film formation)

The pellets (II) were dried at 110°C for 10 hours, then fed to an extruder, melted at a melting temperature of 295°C, then filtered and extruded through a single-layer die. The melt was extruded onto a rotary cooling drum to give a non-stretched film having a total thickness of 176 μm.

(Stretching)

The non-stretched film obtained was supplied to a stenter, and simultaneously at 150°C it was stretched 1.1 times as large as the non-stretched film at 15 %/minute in the machine direction and stretched 2.0 times as large as the non-stretched film at 150 %/minute in the transverse direction to give a biaxially stretched film (8) having a thickness of 80 μm. Table 1 shows the properties thereof.

Comparative Example 1

A non-stretched film (CE1) having a thickness of 40 μm was obtained by means of adjusting the extrusion speed and the rotary cooling drum speed in the same manner as in Example 1 except that the pellets (I) as a raw material were replaced with a commercially available COP resin (ZEONEX supplied by ZEON CORPORATION). Table 1 shows the properties thereof.

Comparative Example 2

A non-stretched film having a thickness of 88 μm was obtained by means of adjusting the extrusion speed and the rotary cooling drum speed in the same manner as in Example 1 except that the pellets (I) as a raw material were replaced with a commercially available COP resin (ZEONEX supplied by ZEON CORPORATION). Further, the non-stretched film was stretched in the same manner as in Example 1 to give a biaxially stretched film (CE2) having a thickness of 40 μm. Table 1 shows the properties thereof.

Comparative Example 3

A commercially available TAC film (FUJITAC, thickness 80 μm, supplied by Fuji Photo Film Co., Ltd.) was employed as a film (CE3). Table 1 shows the properties thereof.

Table 1

| | Copolymer (A) | | Copolymer (B) | Stretching method | $R^{TD}$ | $R^{MD}$ | Thickness | Rp | Rth | Water vapor permeability |
|---|---|---|---|---|---|---|---|---|---|---|
| | Type | wt% | wt% | | Times | Times | μm | nm | nm | $g/m^2$-day |
| Ex.1 | A1 | 85 | 15 | Simultaneous | 1.1 | 2.0 | 80 | 120 | 250 | 60 |
| Ex.2 | A1 | 85 | 15 | Monoaxial | - | 2.2 | 80 | 385 | 45 | 60 |
| Ex.3 | A1 | 85 | 15 | Sequential | 1.2 | 2.0 | 80 | 75 | 370 | 60 |
| Ex.4 | A1 | 85 | 15 | Sequential | 1.5 | 1.5 | 80 | 12 | 380 | 60 |
| Ex.5 | A1 | 78 | 22 | Sequential | 1.2 | 2.0 | 80 | 95 | 225 | 60 |
| Ex.6 | A1 | 90 | 10 | Sequential | 1.2 | 2.0 | 80 | 165 | 285 | 60 |
| Ex.7 | A1 | 55 | 45 | Simultaneous | 1.1 | 2.0 | 80 | 350 | -40 | 60 |
| Ex.8 | A2 | 50 | 50 | Simultaneous | 1.1 | 2.0 | 80 | 300 | 20 | 60 |
| C.Ex.1 | COP | | | Non-stretched | - | - | 40 | 80 | 240 | 0.5 |
| C.Ex.2 | COP | | | - | 1.1 | 2.0 | 40 | 0.3 | 5 | 0.5 |
| C.Ex.3 | TAC | | | - | - | - | 80 | 0.2 | 30 | 480 |
| Ex.: Example<br>C.Ex.: Comparative Example | | | | | | | | | | |

Example 9

(Preparation of sheet polarizer)

70 Parts by weight of the copolymer (A1) and 30 parts by weight of the copolymer (B) were mixed by shaking, and the mixture was kneaded and extruded under nitrogen with a twin-screw extruder to give pellets (III) (Tg 110˚C). The thus-obtained pellets (III) were melted, extruded and stretched in the same manner as in Example 1 to give a biaxially stretched film (R) having a thickness of 80 μm. The film (R) had an Rp of 7 nm, an Rth of 15 nm and a water vapor permeability of 60 g/$m^2$-day.

Then, the film (1) obtained in Example 1, the film (R) and a polyvinyl alcohol polarizing film were attached to prepare a sheet polarizer, and the sheet polarizer was evaluated for durability.

The polyvinyl alcohol polarizing film was obtained by immersing a 120 μm thick polyvinyl alcohol film in an aqueous solution containing 1 part of iodine, 2 parts of potassium iodide and 4 parts of boric acid and stretching the film at the ratio of 4 times at 50˚C.

Further, the procedures for attaching the above film (1) and the film (R) to the above polarizing film to obtain the sheet polarizer were as follows.

(1) Corona discharge treatment (treatment power = 800 W (200 V, 4A), distance between electrode and film = 1 mm, treatment speed = 12 m/minute) is applied to one surface of each of the above film (1) and the above film (R) which had been prepared in the rectangular form of 30 cm x 18 cm each.
(2) A polarizing film (polarizer) prepared in the same size as that of the film (1) and film (R) is immersed in a vessel of a polyvinyl alcohol adhesive having a solid content of 2 mass% for 1 - 2 seconds.
(3) An excess adhesive adhering to the polarizing film (polarizer) is gently removed, the polarizer is placed on the corona-treated surface of the film (1) such that the polarizer is to be sandwiched between the film (1) and the film (R), and further, the film (R) is placed such that the corona-treated surface of the film (R) comes in contact with the adhesive. The direction in which the melt-extrusion has been carried out for forming the film (1) and the film (R) is in parallel with the direction in which the polarizer has been stretched.
(4) An excess adhesive and gas bubbles are removed from end portions of the laminated material having the polarizing film, the film (1) and the film (R), and these members are bonded, with a hand roller. The hand roller was exerted under a pressure of 20 to 30 N/$cm^2$ and at a roller speed of approximately 2 m/minute.
(5) The sample obtained was left in a dryer at 80˚C for 2 minutes to obtain a sheet polarizer.

(Making of liquid crystal display)

Then, such sheet polarizers were attached to surfaces of the liquid crystal cell one each in a manner in which the rubbing axis direction of the substrate surface to which the liquid crystal cell was adjacent and the transmission axis of the sheet polarizers crossed each other at right angles and in which the films (1) of the sheet polarizers were in contact with the liquid crystal cell, to make a liquid crystal display. As the liquid crystal cell, a commercially available VA mode LCD monitor or IPS mode LCD monitor, from which an optical compensation film and a polarizer thereof had been peeled, was used. The thus-obtained liquid crystal displays were evaluated for viewing angle characteristics. Examples 10 to 19 and Comparative Examples 4 to 6

Sheet polarizers and a liquid crystal display formed therefrom were produced in the same manner as in Example 9 except that the film (1) and the film (R) were replaced with films shown in Table 2 and that such films were attached to both surfaces of a polyvinyl alcohol polarizing film. Table 2 shows evaluation results of durability and viewing angle characteristics of them.

In Examples 17 to 19 and Comparative Example 5, films (CE3) were subjected to alkali treatment instead of the corona treatment. The alkali treatment refers to the treatment of a film surface, which was carried out by immersing a film in a solution containing 2 mol/l of sodium hydroxide under the temperature condition of 60˚C for 1 minute, washing the film with water and drying it.

As is seen from Table 2, the sheet polarizers according to the present invention are remarkably improved in durability. Further, the liquid crystal displays using the sheet polarizers according to the present invention are remarkably improved in viewing angle characteristics.

Table 2

| | Sheet polarizer | | Durability of sheet polarizer | Viewing angle characteristics | |
|---|---|---|---|---|---|
| | Stretched film (X) | Stretched film (Y) | | LCD used | Evaluation results |
| Ex.9 | Film (1) | Film (R) | ○ | VA | O |
| Ex.10 | Film (2) | Film (R) | O | VA | O |
| Ex.11 | Film (3) | Film (R) | O | VA | O |
| Ex.12 | Film (4) | Film (R) | O | VA | O |
| Ex.13 | Film (5) | Film (R) | O | VA | O |
| Ex.14 | Film (6) | Film (R) | O | VA | O |
| Ex.15 | Film (7) | Film (R) | O | IPS | O |
| Ex.16 | Film (8) | Film (R) | ○ | IPS | O |
| Ex.17 | Film (1) | Film (CE3)* | O | VA | O |
| Ex.18 | Film (7) | Film (CE3)* | O | IPS | O |
| Ex.19 | Film (8) | Film (CE3)* | O | IPS | O |
| C.Ex.4 | Film (R) | Film (R) | O | VA | × |
| | | | | IPS | × |
| C.Ex.5 | Film (CE3)* | Film (CE3)* | × | VA | × |
| | | | | IPS | × |
| C.Ex.6 | Film (CE1) | Film (CE2) | × | VA | O |
| Ex.: Example<br>C.Ex.: Comparative Example<br>*Alkali treatment was carried out instead of corona treatment | | | | | |

Industrial Applicability

The stretched film of the present invention has optical anisotropy suitably controlled and proper water vapor permeability, so that it can be suitably used as an optical member such as a retardation film or a retardation-functioning protective film for a sheet polarizer. Further, the optical member using the stretched film of the present invention can be suitably used in liquid crystal displays having VA mode and IPS mode liquid crystal cells.

## Claims

**1.** A stretched film (X) obtained from a resin composition by melt-extrusion casting followed by stretching at least in one direction,

(1) the resin composition containing a maleimide-olefin copolymer (A) having 40 to 60 mol% of a recurring unit represented by the following formula (I),

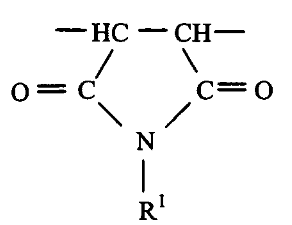

(I)

wherein $R^1$ is a hydrogen atom, an alkyl group having 1 to 6 carbon atoms or a monovalent

aromatic hydrocarbon group,
and 60 to 40 mol% of a recurring unit represented by the following formula (II),

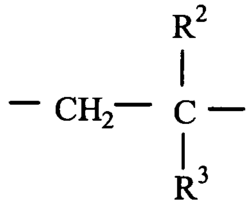

(II)

wherein each of $R^2$ and $R^3$ is independently a hydrogen atom or an alkyl group having 1 to 6 carbon atoms, and an acrylonitrile-styrene copolymer (B) containing 21 to 45 % by weight of an acrylonitrile unit,
the resin composition having a copolymer (A) content of at least 50 % by weight but not more than 99 % by weight and a copolymer (B) content of at least 1 % by weight but not more than 50 % by weight,
(2) the stretched film (X) having a maximum retardation (Rp) at 550 nm in an in-plane direction, the maximum retardation satisfying the following expression,

$$10\ \mathrm{nm} < Rp \leq 400\ \mathrm{nm}$$

(3) the stretched film (X) having a retardation (Rth) at 550 nm in the thickness direction, the retardation satisfying the following expression,

$$0\ \mathrm{nm} < |Rth| \leq 400\ \mathrm{nm}.$$

**2.** The stretched film of claim 1, wherein

(1-a) the resin composition has a copolymer (A) content of over 75 % by weight but not more than 99 % by weight and a copolymer (B) content of at least 1 % by weight but less than 25 % by weight,
(2-a) Rp satisfies the following expression,

$$10\ \mathrm{nm} < Rp \leq 250\ \mathrm{nm}$$

and
(3-a) Rth satisfies the following expression,

$$0\ \mathrm{nm} < |Rth| \leq 400\ \mathrm{nm}.$$

**3.** The stretched film of claim 1, wherein

(1-b) the resin composition has a copolymer (A) content of over 50 % by weight but not more than 65 % by weight and a copolymer (B) content of at least 35 % by weight but less than 50 % by weight,
(2-b) Rp satisfies the following expression,

$$10\ \mathrm{nm} < Rp \leq 400\ \mathrm{nm}$$

and
(3-b) Rth satisfies the following expression,

$$0\ nm < |Rth| \leq 400\ nm.$$

**4.** The stretched film of claim 3, which satisfies the following expressions,

$$ny < nz < nx$$

and

$$0.3 \leq \{(nx-nz)/(nx-ny)\} \leq 0.9,$$

wherein nx is a refractive index in an in-plane lagging axis direction at 550 nm,
ny is a refractive index in a direction perpendicular to the in-plane lagging axis at 550 nm, and
nz is a refractive index in the thickness direction at 550 nm.

**5.** The stretched film of claim 1, which is a product by the stretching at a stretch ratio that satisfies the following expression,

$$R^{MD} > R^{TD} \text{ or } R^{TD} > R^{MD}$$

wherein $R^{MD}$ is a stretch ratio in the machine direction and $R^{TD}$ is a stretch ratio in the transverse direction.

**6.** The stretched film of claim 5, wherein $|R^{MD}/R^{TD}|$ or $|R^{TD}/R^{MD}|$ is in the range of over 1.0 but not more than 5.0.

**7.** The stretched film of claim 1, which is a biaxially stretched film.

**8.** The stretched film of claim 1, which has one or less coarse streaked projection having a height of 10 μm or more, a width of 0.3 mm or more and a length of 5 cm or more, per meter of width in the transverse direction of the stretched film.

**9.** The stretched film of claim 1, which has a water vapor permeability of 5 to 250 $g/(m^2 \cdot day)$.

**10.** A process for the production of a stretched film, which comprises forming a film from a resin composition by melt-extrusion casting and then stretching the film at least in one direction,

(1) the resin composition containing a maleimide-olefin copolymer (A) having 40 to 60 mol% of a recurring unit represented by the following formula (I),

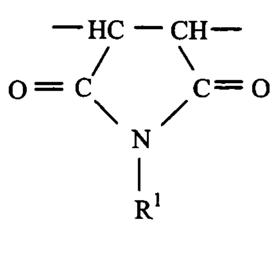

(I)

wherein $R^1$ is a hydrogen atom, an alkyl group having 1 to 6 carbon atoms or a monovalent aromatic hydrocarbon group,
and 60 to 40 mol% of a recurring unit represented by the following formula (II),

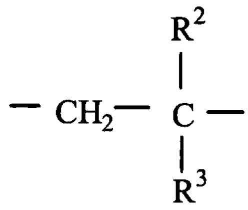

(II)

wherein each of $R^2$ and $R^3$ is independently a hydrogen atom or an alkyl group having 1 to 6 carbon atoms, and an acrylonitrile-styrene copolymer (B) containing 21 to 45 % by weight of an acrylonitrile unit, the resin composition having a copolymer (A) content of at least 50 % by weight but not more than 99 % by weight and a copolymer (B) content of at least 1 % by weight but not more than 50 % by weight,
(2) the film being stretched at a stretch ratio that satisfies the following expression,

$$R^{MD}>R^{TD} \text{ or } R^{TD}>R^{MD}$$

wherein $R^{MD}$ is a stretch ratio in the machine direction and $R^{TD}$ is a stretch ratio in the transverse direction.

**11.** The Process of claim 10, which the stretching is carried out by biaxial stretching.

**12.** The process of claim 10, wherein $|R^{MD}/R^{TD}|$ or $|R^{TD}/R^{MD}|$ is in the range of over 1.0 but not more than 5.0.

**13.** The process of claim 10, wherein $R^{MD}$ is in the range of 1.0 to 1.8 and $R^{TD}$ is in the range of 1.5 to 3.5.

**14.** The process of claim 10, wherein the stretching is carried out at a stretching temperature (Td) in the range of Tg to (Tg + 40˚C) in which Tg is a glass transition temperature of the resin composition, and at a stretching velocity of 5 to 5,000 %/minute.

**15.** A laminated material comprising the stretched film (X) recited in claim 1 and a polarizer formed thereon.

**16.** The laminated material of claim 15, wherein the polarizer is formed from a polyvinyl alcohol containing iodine or an anisotropic dye.

**17.** The laminated material of claim 15, wherein a film is further formed on the polarizer.

**18.** The laminated material of claim 15, wherein the film is a stretched film (Y) formed from a resin composition by melt-extrusion casting followed by stretching at least in one direction,

(1-c) the resin composition containing a maleimide-olefin copolymer (A) having 40 to 60 mol% of a recurring unit represented by the following formula (I),

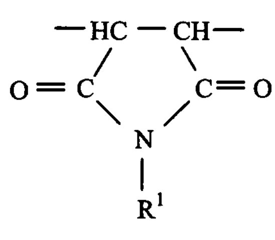

(I)

wherein $R^1$ is a hydrogen atom, an alkyl group having 1 to 6 carbon atoms or a monovalent aromatic hydrocarbon group,
and 60 to 40 mol% of a recurring unit represented by the following formula (II),

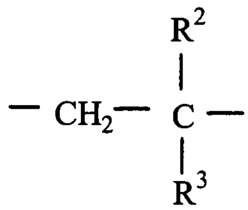 (II)

wherein each of $R^2$ and $R^3$ is independently a hydrogen atom or an alkyl group having 1 to 6 carbon atoms, and an acrylonitrile-styrene copolymer (B) containing 21 to 45 % by weight of an acrylonitrile unit, the resin composition having a copolymer (A) content of over 65 % by weight but less than 75 % by weight and a copolymer (B) content of over 25 % by weight but less 35 % by weight,
(2-c) the stretched film (Y) having a maximum retardation (Rp) at 550 nm in an in-plane direction, the maximum retardation satisfying the following expression,

$$Rp < 10 \text{ nm}.$$

**19.** The laminated material of claim 15, which is a sheet polarizer.

**20.** A liquid crystal display comprising a liquid crystal cell and laminated materials of claim 15 arranged on both surfaces of the liquid crystal cell.

**INTERNATIONAL SEARCH REPORT**

International application No.
PCT/JP2005/002365

A. CLASSIFICATION OF SUBJECT MATTER
Int.Cl[7] C08J5/18, B29C55/02, C08L35/00, G02B5/30//C08L25:12

According to International Patent Classification (IPC) or to both national classification and IPC

B. FIELDS SEARCHED

Minimum documentation searched (classification system followed by classification symbols)
Int.Cl[7] C08J5/18, B29C55/02, C08L35/00, G02B5/30//C08L25:12

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2001/037007 A1 (Kaneka Corp.),<br>25 May, 2001 (25.05.01),<br>Claims; page 10, lines 10 to 17; page 20, lines 2 to 14; page 24, line 4 to page 25, line 23; page 29, line 25 to page 30, line 20; page 37, line 11 to page 38, line 17; page 45, line 16 to page 46, line 23; page 63, table 5, example 25<br>& EP 1160591 A1<br>Page 6, Par. Nos. [0051] to [0052]; page 10, Par. Nos. [0089] to [0091]; page 12, Par. Nos. [0110] to [0117]; page 14, Par. Nos. [0130] to [0134]; page 17, Par. Nos. [0161] to [0165]; page 20, Par. Nos. [0195] to [0202]; page 32, table 5, example 25<br>& KR 2001101475 A & CN 1337009 A<br>& JP 2001-343529 A | 1-7,10-20<br>8,9 |

[X] Further documents are listed in the continuation of Box C. [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 April, 2005 (12.04.05) | 10 May, 2005 (10.05.05) |
| Name and mailing address of the ISA/<br>Japanese Patent Office<br>Facsimile No. | Authorized officer<br><br>Telephone No. |

Form PCT/ISA/210 (second sheet) (January 2004)

**INTERNATIONAL SEARCH REPORT**

International application No.
PCT/JP2005/002365

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2003-026942 A (Kaneka Corp.), 29 January, 2003 (29.01.03), Claims; pages 12 to 13, Par. No. [0122] (Family: none) | 8 |
| Y | JP 2004-045893 A (Kaneka Corp.), 12 February, 2004 (12.02.04), Claims; page 4, Par. No. [0013] (Family: none) | 9 |
| P,A | JP 2004-315788 A (Tosoh Corp.), 11 November, 2004 (11.11.04), Claims; page 4, Par. No. [0013] & US 2004/0190138 A1 | 1-20 |
| P,A | JP 2004-346199 A (Tosoh Corp.), 09 December, 2004 (09.12.04), Claims; page 4, Par. No. [0013] (Family: none) | 1-20 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3414083 B
- JP 2000080239 A
- JP 2000080240 A
- JP 2002341140 A
- JP 2002243943 A